# EUROPÄISCHE PATENTSCHRIFT

(11) **EP 2 160 307 B1**
(45) Veröffentlichungstag und Bekanntmachung des Hinweises auf die Patenterteilung: **19.01.2011**
(21) Anmeldenummer: 08774099.9
(22) Anmeldetag: 16.06.2008
(51) Int. Cl.: B60T 7/04

(54) **PEDALWEGSIMULATOR**
PEDAL TRAVEL SIMULATOR
SIMULATEUR DE COURSE DE PEDALE

(30) Priorität: 29.06.2007 DE 102007030312
(43) Veröffentlichungstag der Anmeldung: 10.03.2010
(73) Patentinhaber: Robert Bosch GmbH, 70442 Stuttgart (DE)
(72) Erfinder: NOACK, Christoph, 71701 Schwieberdingen (DE); NAGEL, Willi, 71686 Remseck/Hochdorf (DE); GRZESIK, Axel, 70197 Stuttgart (DE)
(86) Internationale Anmeldenummer: PCT/EP2008/057572
(87) Internationale Veröffentlichungsnummer: WO 2009/003835

(56) Entgegenhaltungen:
- FR-A- 2 838 695
- GB-A- 1 395 021
- US-A1- 2006 071 544

## Beschreibung

### Stand der Technik

Die Erfindung betrifft einen Pedalwegsimulator mit den Merkmalen des Oberbegriffs des Anspruchs 1.

Pedalwegsimulatoren werden verwendet für Fremdkraftbremsanlagen, also für Fahrzeugbremsanlagen, bei denen die zur Erzeugung der Bremskraft benötigte Energie von einer Energieversorgungseinrichtung und nicht von der Muskelkraft eines Fahrzeugführers ausgeht Beispiele für Fremdkraftbremsanlagen sind Druckluftbremsanlagen und elektrohydraulische Bremsanlagen, bei denen ein zur Erzeugung der Bremskraft notwendiger Druck von einem Kompressor oder einer Hydropumpe erzeugt und üblicherweise in einem Druckluftbehälter oder Hydrospeicher gespeichert wird. Ein weiteres Beispiel einer Fremdkraftbremsanlage ist eine elektromechanische Bremsanlage, bei der die Bremskraft mit einem Elektromotor erzeugt wird, wobei üblicherweise jede Radbremse einen oder auch mehrere Elektromotoren aufweist.

Die Höhe der Bremskraft wird bei Fremdkraftbremsanlagen üblicherweise in Abhängigkeit von einem Weg, um den ein Betätigungselement bewegt wird, oder einer Kraft, die das Betätigungselement erzeugt, eingestellt. Das Betätigungselement ist üblicherweise ein (Fuß-)Bremspedal oder ein (Hand-)Bremshebel, wobei anstelle des Wegs auch der Schwenkwinkel herangezogen werden kann. Die Abhängigkeit von der Führungsgröße, also dem Weg, Winkel oder der Kraft, kann, muss allerdings nicht linear sein. Wenn nachfolgend von einem Bremspedal die Rede ist, soll darunter verallgemeinernd auch ein Handbremshebel oder ein sonstiges Betätigungselement einer Fahrzeugbremsanlage verstanden werden.
Zur Erzeugung der Führungsgröße für eine Fremdkraftbremsanlage sind Pedalwegsimulatoren bekannt, die eine von einem Pedalweg abhängige Rückstellkraft auf ein Bremspedal bewirken.
Die Rückstellkraft ist einer Betätigungsrichtung des Betätlgungselements entgegen gerichtet und beaufschlagt das Betätigungselement in Richtung seiner Grundstellung. Die Betätigungsrichtung bewirkt eine Betätigung der Fremdkraftbremsanlage bzw. eine Erhöhung der Bremskraft oder allgemeiner eine Erhöhung der Bremswirkung. Die Rückstellkraft des Pedalwegsimulators wirkt einer vom Fahrzeugführer auf das Betätigungselement ausgeübten Muskelkraft entgegen.

Ein Pedalwegsimulator nach den Merkmalen des Oberbegriffs des Anspruchs 1 ist beispielsweise bekannt aus der FR 2 838 695 A. Dieser ist von einem Betätigungselement 12 betätigbar und weist ein Rückstellmittel 18 auf, das eine Rückstellkraft auf dieses ₋Betätigungselement ausübt. Zur Begrenzung der Betätigungskraft für das Betätigungselement ist eine entsprechende Vorrichtung (78, 80, 92) vorgesehen. Derart ausgestattete Pedalwegsimulatoren sind zudem in der US 2006/071544 A1 oder in der GB 1395 021 A offenbart.

Ein weiterer Pedalwegsimulator ist offenbart in der Offenlegungsschrift DE 43 24 041 A1. Dieser bekannte Pedalwegsimulator weist ein Bremspedal als Betätigungselement auf, das über eine Kolbenstange einen Kolben in einem Zylinder verschiebt Der Zylinder weist eine Druckgasfüllung auf, die die vom Pedalweg abhängige Rückstellkraft auf das Bremspedal bewirkt. Als Führungsgröße für die Fahrzeugbremsanlage wird ein Pedalweg, wahlweise auch ein Schwenkwinkel des Bremspedals, ein Kolbenweg oder der Druck des Druckgases gemessen. Der Pedalwegsimulator steht nicht in Wirkverbindung, also nicht in mechanischer, hydraulischer oder pneumatischer Verbindung mit der Fahrzeugbremsanlage, insbesondere wird ein Bremsdruck nicht mit dem Pedalwegsimulator erzeugt. Der Pedalwegsimulator steht allerdings in Signalverbindung mit der Fahrzeugbremsanlage, insbesondere elektrisch. Zusätzlich weist der bekannte Pedalwegsimulator ein Federelement auf, das während eines ersten Teiles eines Pedalwegs auf Druck und während eines zweiten Teiles des Pedalwegs auf Zug belastet wird.

### Offenbarung der Erfindung

Der Pedalwegsimulator mit den Merkmalen des Anspruchs 1 weist ein Rückstellmittel auf, das eine Rückstellkraft auf das Betätigungselement ausübt, wobei die Rückstellkraft einer Betätigungsrichtung entgegen gerichtet ist. Beim Rückstellmittel kann es sich beispielsweise um ein Federelement handeln, das das Betätigungselement in eine Grundstellung beaufschlagt und dessen Federkraft die Rückstellkraft bildet. Die Rückstellkraft wirkt einer Muskelkraft, die ein Fahrzeugführer zur Betätigung der Fahrzeugbremsanlage auf das Betätigungselement ausübt, entgegen. Des Weiteren weist der Pedalwegsimulator eine Vorrichtung zur Kraftbegrenzung (im Folgenden der Einfachheit halber bezeichnet als Kraftbegrenzung) auf, die die Rückstellkraft des Rückstellmittels begrenzt. Durch die Kraftbegrenzung wird die maximale Kraft zum Bewegen des Betätigungselements des Pedalwegsimulators begrenzt, wobei die durch Fremdenergie erzeugte Bremskraft einfach durch Weiterbewegen des Betätigungselements in der Betätigungsrichtung erhöht werden kann. Die Kraftbegrenzung des Pedalwegsimulators gemäß der Erfindung kann die Betätigungskraft auf einen konstanten Wert begrenzen, wenn das Rückstellmittel und die Kraftbegrenzung in Reihe geschaltet werden. In einer bevorzugten Parallelschaltung von Rückstellmittel und Kraftbegrenzung steigt die zur Betätigung erforderliche Kraft weiter an, jedoch ist der Kraftanstieg durch die Kraftbegrenzung verringert. Kraftbegrenzung im Sinne der Erfindung bedeutet also zumindest eine Verringerung des Anstiegs der Betätigungskraft im Vergleich zu einem Pedalwegsimulator ohne Kraftbegrenzung.

Erfindungsgemäß weist der Pedalwegsimulator einen Dämpfer auf, der eine Bewegung des Betätigungselements zumindest in Betätigungsrichtung dämpft und der der Vorrichtung zur Kraftbegrenzung parallel geschaltet ist. Ein solcher Dämpfer verbessert die Gestaltbarkeit der Betätigungscharakteristik des Pedalwegsimulators.

Die Unteransprüche haben vorteilhafte Ausgestaltungen und Weiterbildungen der in Anspruch 1 angegebenen Erfindung zum Gegenstand.

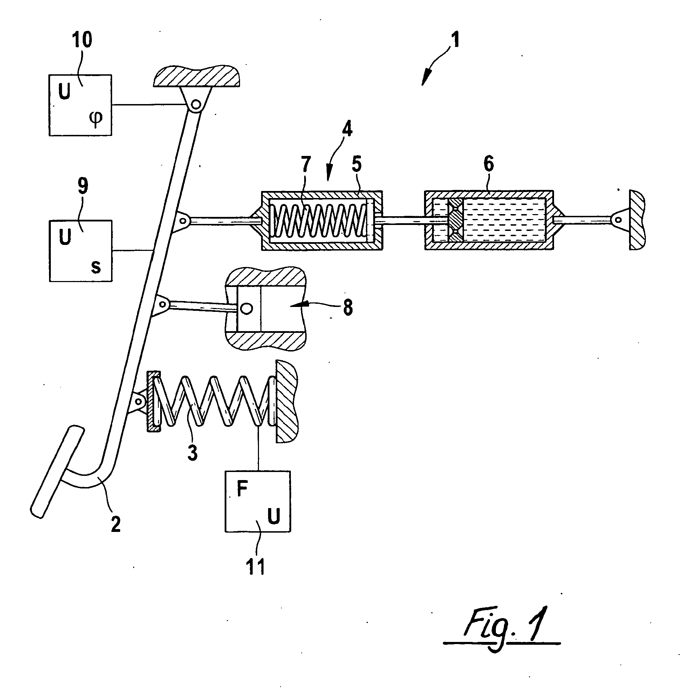

### Kurze Beschreibung der Zeichnung

Die Erfindung wird nachfolgend anhand einer in der Zeichnung dargestellten Ausführungsform näher erläutert. Die einzige Figur zeigt eine Schemadarstellung eines Pedalwegsimulators gemäß der Erfindung.

### Ausführungsform der Erfindung

Der in der Zeichnung dargestellte, erfindungsgemäße Pedalwegsimulator 1 wird mit einem Bremspedal 2 betätigt, das allgemein als Betätigungselement aufgefasst werden kann. Der Pedalwegsimulator 1 weist ein Federelement 3 auf, das am Bremspedal 2 angreift und einer Betätigung des Bremspedals 2 entgegen wirkt. Das Federelement 3 bildet ein Rückstellmittel, das eine Rückstellkraft auf das Bremspedal 2 ausübt, gegen die das Bremspedal 2 durch Muskelkraft eines Fahrzeugführers betätigbar ist.

Des Weiteren weist der Pedalwegsimulator 1 eine Kraftbegrenzung 4 mit einem Kraftbegrenzer 5 und einen Dämpfer 6 auf, der mit dem Kraftbegrenzer 5 in Serie geschaltet ist. Der Kraftbegrenzer 5 und der Dämpfer 6 greifen am Bremspedal 2 an und stützen sich ortsfest ab. Der Dämpfer 6 ist beispielsweise ein Flüssigkeitsdämpfer mit einer geschwindigkeitsabhängigen Dämpfung. Der Kraftbegrenzer 5 weist ein Federlement 7 auf, das vorgespannt ist. Durch die Vorspannung wird das Federelement 7 erst wirksam, wenn eine am Kraftbegrenzer 5 angreifende Kraft eine Vorspannkraft übersteigt. Eine Kraft des Kraftbegrenzers 5 steigt dann nicht von Null, sondern von der Vorspannkraft an.

Als Federelement 3 kommen an sich beliebige Feder- oder elastische Elemente in Betracht, also außer Schrauben Druck- oder Zugfedern auch Biege- oder Torsionsfedern, Spiralfedern oder Elastomerelemente. Bei der dargestellten Ausführungsform der Erfindung ist das Federelement 3, das das Rückstellmittel bildet, dem Kraftbegrenzer 5 und dem Dämpfer 6 parallel geschaltet. Es ist auch eine Reihenschaltung des Federelements 3, das das Rückstellmittel bildet, mit dem Kraftbegrenzer 5 möglich (nicht dargestellt). In diesem Fall wird der Anstieg der auf das Bremspedal 2 ausgeübten Betätigungskraft bis zur Vorspannkraft des Federelements 7 des Kraftbegrenzers 5 von dem das Rückstellmittel bildenden Federelement 3 bestimmt. Der weitere Kraftanstieg wird von der Serienschaltung des Federelements 7 des Kraftbegrenzers 5 und dem das Rückstellmittel bildenden Federelement 3 bestimmt, der Kraftanstieg ist also geringer als er ausschließlich durch das das Rückstellmittel bildende Federelement 3 wäre.

Im dargestellten Ausführungsbeispiel begrenzt der Kraftbegrenzer 5 eine Kraft des Dämpfers 6. Übersteigt die Kraft des Dämpfers 6 die Vorspannkraft des Kraftbegrenzers 5, verringert der Kraftbegrenzer 5 den Kraftanstieg. Durch den Kraftbegrenzer 5 ist der Kraftanstieg bei Überschreiten der Vorspannkraft des Federelements 7 des Kraftbegrenzers 5 geringer als er es ohne den Kraftbegrenzer 5 wäre. Die Kraft des Dämpfers 6 ist abhängig von der Betätigungsgeschwindigkeit, also der Geschwindigkeit, mit der das Bremspedal 2 bewegt wird. Die Kraftbegrenzung durch den Kraftbegrenzer 5 ist also bei einer schnellen Pedalbetätigung, also einer schnellen Bewegung des Bremspedals 2, wirksam. Insbesondere bei einer Not- oder Panikbremsung, bei der das Bremspedal 2 von einem Fahrzeugführer mit hoher Geschwindigkeit niedergetreten wird, verringert der Kraftbegrenzer 5 die zum Treten des Bremspedals 2 erforderliche Muskelkraft. Zugleich wird eine mechanische Belastung der Bauelemente des Pedalwegsimulators 1 verringert.

Bei der dargestellten Ausführungsform der Erfindung weist der Pedalwegsimulator 1 einen weiteren Dämpfer 8 auf, der dem Kraftbegrenzer 5 und dem das Rückstellmittel bildenden Federelement 3 parallel geschaltet ist. Der weitere Dämpfer 8 ist ein Reibungsdämpfer, der eine konstante Dämpfung aufweist, die nicht von der Geschwindigkeit des Bremspedals 2 abhängig ist. Durch die Wahl verschiedener Elemente, bei der dargestellten Ausführungsform der Erfindung, also des das Rückstellmittel bildenden Federelements 3, des Kraftbegrenzers 5, des Dämpfers 6 und des weiteren Dämpfers 8, und die Anordnung bzw. Verschaltung der Elemente parallel bzw. in Serie, lässt sich eine Abhängigkeit der Pedalkraft von einem Pedalweg, also eine Kraft-Weg-Charakteristik oder -Kennlinie oder eine Schar von Kraft-Weg-Charakteristiken oder -Kennlinien des Pedalwegsimulators 1 beeinflussen und gewünschte Charakteristiken erreichen oder zumindest näherungsweise erreichen. Es ist beispielsweise möglich, eine (Schar von) Kraft-Weg-Kennlinie(n) zumindest näherungsweise zu erreichen, wie sie von hydraulischen Fahrzeugbremsanlagen bekannt und gewohnt ist. Mit anderen Worten: mit dem erfindungsgemäßen Pedalwesimulator 1 läßt sich ein gewünschtes oder gewohntes Pedalverhalten zumindest näherungsweise erreichen.

Am Bremspedal 2 ist ein Wegsensor 9 oder wahlweise ein Winkelsensor 10 vorgesehen. Des Weiteren ist ein Kraftsensor 11 vorhanden. Es genügt einer der drei Sensoren 9, 10, 11, für eine Redundanz können auch zwei der Sensoren 9, 10, 11 vorhanden sein. Das Signal eines oder mehrerer der Sensoren 9, 10, 11 bildet eine Führungsgröße für eine nicht dargestellte Fremdkraftbremsanlage, deren Bremskraft in Abhängigkeit von der Führungsgröße gesteuert oder geregelt wird. Die Abhängigkeit der Bremskraft von der Führungsgröße kann linear oder nicht-linear sein, grundsätzlich ist eine beliebige Abhängigkeit möglich.

## Patentansprüche

1. Pedalwegsimulator für eine Fremdkraftbremsanlage, der mit einem Betätigungselement (2) betätigbar ist und der ein Rückstellmittel (3) aufweist, das eine Rückstellkraft auf das Betätigungselement (2) ausübt, die einer Betätigungsrichtung entgegen gerichtet ist, wobei der Pedalwegsimulator (1) eine Vorrichtung zur Kraftbegrenzung (4) für eine Betätigungskraft, des Betätigungselements (2) aufweist, und wobei der Pedalwegsimulator (1) einen Dämpfer (8) aufweist, der eine Bewegung des Betätigungselements (2) zumindest in der Betätigungsrichtung dämpft , **dadurch gekennzeichnet, dass** der Dümpfer(8) der Vorrichtung zur Kraftbegrenzung (4) parallel geschaltet ist.

2. Pedalwegsimulator nach Anspruch 1, **dadurch gekennzeichnet, dass** die Vorrichtung zur Kraftbegrenzung (4) einen Kraftbegrenzer (5) mit einem vorgespannten Federelement (7) aufweist, das eine Änderung der Betätigungskraft begrenzt, wenn die Betätigungskraft eine Vorspannkraft des Federelements (7) des Kraftbegrenzers (5) übersteigt.

3. Pedalwegsimulator nach Anspruch 1, **dadurch gekennzeichnet, dass** der Pedalwegsimulator (1) einen Dämpfer (6) aufweist, der eine Bewegung des Betätigungselements (2) zumindest in der Betätigungsrichtung dämpft und der mit der Vorrichtung zur Kraftbegrenzung (4) in Reihe geschaltet ist.

4. Pedalwegsimulator nach Anspruch 1, **dadurch gekennzeichnet, dass** das Rückstellmittel (3) der Vorrichtung zur Kraftbegrenzung (4) parallel geschaltet ist

5. Pedalwegsimulator nach Anspruch 4, **dadurch gekennzeichnet, dass das** Rückstellmittel (3) ein Federelement aufweist.

## Claims

1. Pedal travel simulator for a power brake system, which pedal travel simulator can be activated with an activation element (2) and which has a restoring means (3) which applies a restoring force to the activation element (2), which restoring force is directed counter to an activation direction, wherein the pedal travel simulator (1) has a power-limiting device (4) for an activation force of the activation element (2), and wherein the pedal travel simulator (1) has a damper (8) which damps a movement of the activation element (2) at least in the activation direction, **characterized in that** the damper (8) is connected in parallel with the power-limiting device 4).

2. Pedal travel simulator according to Claim 1, **characterized in that** the power-limiting device (4) has a power limiter (5) with a prestressed spring element (7) which limits a change in the activation force when the activation force exceeds a prestressing force of the spring element (7) of the power limiter (5).

3. Pedal travel simulator according to Claim 1, **characterized in that** the pedal travel simulator (1) has a damper (6) which damps a movement of the activation element (2) at least in the activation direction and which is connected in series with the power-limiting device (4).

4. Pedal travel simulator according to Claim 1, **characterized in that** the restoring means (3) is connected in parallel with the power-limiting device (4).

5. Pedal travel simulator according to Claim 4, **characterized in that** the restoring means (3) has a spring element.

## Revendications

1. Simulateur de course de pédale pour une installation de servofrein, qui peut être commandé par un élément de commande (2) et qui présente un moyen de rappel (3) qui exerce une force de rappel sur l'élément de commande (2) qui est orientée en sens inverse d'une direction de commande, le simulateur de course de pédale (1) présentant un dispositif pour la limitation de force (4) d'une force de commande de l'élément de commande (2), et le simulateur de course de pédale (1) présentant un amortisseur (8), qui amortit un mouvement de l'élément de commande (2) au moins dans la direction de commande, **caractérisé en ce que** l'amortisseur (8) est monté en parallèle avec le dispositif pour la limitation de force (4).

2. Simulateur de course de pédale selon la revendication 1, **caractérisé en ce que** le dispositif pour la limitation de force (4) présente un limiteur de force (5) avec un élément de ressort précontraint (7), qui limite une variation de la force de commande lorsque la force de commande dépasse une force de précontrainte de l'élément de ressort (7) du limiteur de force (5).

3. Simulateur de course de pédale selon la revendication 1, **caractérisé en ce que** le simulateur de course de pédale (1) présente un amortisseur (8) qui amortit un mouvement de l'élément de commande (2) au moins dans la direction de commande, et qui est monté en série avec le dispositif pour la limitation de force (4).

4. Simulateur de course de pédale selon la revendication 1**, caractérisé en ce que** le moyen de rappel (3) est monté en parallèle avec le dispositif pour la limitation de force (4).

5. Simulateur de course de pédale selon la revendication 4, **caractérisé en ce que** le moyen de rappel (3) présente un élément de ressort.
